Europäisches Patentamt

European Patent Office

Office européen des brevets

(19)

(11) Veröffentlichungsnummer : **0 536 109 A1**

## (12) EUROPÄISCHE PATENTANMELDUNG

(21) Anmeldenummer : **92890210.5**

(22) Anmeldetag : **01.10.92**

(51) Int. Cl.$^5$ : **F24D 19/10**, G05D 23/19

(30) Priorität : **01.10.91 AU 1967/91**

(43) Veröffentlichungstag der Anmeldung :
**07.04.93 Patentblatt 93/14**

(84) Benannte Vertragsstaaten :
**AT CH DE FR IT LI SE**

(71) Anmelder : **Austria Email-EHT
Aktiengesellschaft
Breitenseer Strasse 76-80
A-1140 Wien (AT)**

(72) Erfinder : **Pennerstorfer, Walter, Dipl.-Ing.
Dornbacher Strasse 93
A-1170 Wien (AT)**
Erfinder : **Tafner, Friedrich, Ing.
Schubertstrasse 26
A-8720 Knittelfeld (AT)**

(74) Vertreter : **Köhler-Pavlik, Johann, Dipl.-Ing.
Margaretenplatz 5
A-1050 Wien (AT)**

(54) **Messwerterfassungssystem für wärmespeichernde Geräte mit einem Heizungsregelkreis.**

(57)     Meßwerterfassungssystem für den Wärmeinhalt des Mediums wärmespeichernder Geräte mit einem Heizungsregelkreis, mit Meßfühlern zur Ermittlung der mittleren Temperatur und der Maximaltemperatur des Mediums, sowie einer mit den Meßfühlern verbundenen elektronischen Schaltung und einer angeschlossenen Anzeigeeinrichtung mit einem Anzeigetreiberkreis. Die elektronische Schaltung umfaßt einen Mikroprozessor 1, wobei die Meßfühler 3, 4 sowie eine Referenzspannungsquelle 11 mit dessen Analogeingängen verbunden sind und der Mikroprozessor 1 mit einer vorzugsweise binären Kodiereinrichtung 8 zur Eingabe zumindest des Volumens oder der Masse des Mediums versehen ist. Im Programmspeicher ist ein Programm abgelegt, das die Meßfühler 3, 4 abfragt und daraus unter Berücksichtigung der Werte für das Volumen oder Masse und eines Temperaturwertes den Wärmeinhalt des Mediums berechnet und ein entsprechendes Signal an einen Datenausgang des Mikroprozessors 1 legt, der mit dem Anzeigetreiberkreis 6 verbunden ist. Dieser Anzeigetreiberkreis 6 ist seinerseits sowohl mit der Anzeige 7 als auch mit dem Heizungsregelkreis 5 und einem Resetkreis 10 für den Mikroprozessor 1 verbunden und enthält ein Steuerprogramm zum Zurücksetzen des Mikroprozessors 1 und erzeugt ein dem Wärmeinhalt proportionales Steuersignal für den Heizungsregelkreis 5. Die elektronische Schaltung ist mit einem vom Stromnetz aufladbaren Stromversorgungsteil 2 versehen.

FiG.1

EP 0 536 109 A1

Die Erfindung betrifft ein Meßwerterfassungssystem für wärmespeichernde Geräte mit einem Heizungsregelkreis, beispielsweise Warmwasserbereiter, Nacht- oder Pufferspeicher,mit einem Meßfühler zur Ermittlung der mittleren Temperatur des Mediums und einem weiteren Meßfühler zur Ermittlung der Maximaltemperatur des Mediums, sowie einer mit den Meßfühlern verbundenen elektronischen Schaltung und einer Anzeigeeinrichtung.

Bei den herkömmlichen Geräten der eingangs angeführten Art war lange Zeit eine analoge oder auch digitale Temperaturanzeige die einzige Informationsquelle für den Benützer. Da aber während des Betriebes Warm- und Kaltwasser in einer bestimmten Schichtung vorliegen, sind in weiterer Folge Anzeigesysteme für den Wärmeinhalt entwickelt worden. So wird beispielsweise über einen Widerstandsdraht entlang der gesamten Speicherhöhe die mittlere Temperatur und daraus der Wärmeinhalt in Bruchteilen der vollen Kapazität ermittelt. Allerdings kann es bei fehlendem bezug auf eine Temperaturmessung an einem bestimmten Punkt des Speichers zu einer irreführenden Anzeige, da ein bestimmter Wärmeinhalt mit verschiedenen Temperatur- und Mengen-Verhältnissen, d.h. unterschiedlicher Schichtung des Mediums, erreicht werden kann. So ist beispielsweise in der EP-OS 286 193 eine Vorrichtung zur Erfassung des Wärmeinhaltes eines flüssigkeitsgefüllten Behälters beschrieben. Ein länglicher Temperaturfühler erzeugt ein der Durchschnittstemperatur proportionales Signal, welches einer elektronischen Schaltung zugeführt wird, die eine dem Signal und damit dem Wärmeinhalt proportionale Anzahl von Leuchtdioden einschaltet. Nun muß jedoch zum Baden oder Duschen eine bestimmte Wassermenge mit einer vorgegebenen Mindestabgabetemperatur verfügbar sein. Ist aber lediglich der Wärmeinhalt bekannt, kann zwar wenig, aber dafür heißes Wasser bereitstehen, das zu ausreichend warmem Brauchwasser mischbar ist. Allerdings kann mit demselben Wärmeinhalt auch viel Wasser vorhanden sein, das unterhalb der Mindesttemperatur liegt und daher für den genannten Zweck nicht brauchbar ist. Ein weiterer Nachteil der genannten Vorrichtung liegt darin, daß dem Benützer die Abschätzung der verfügbaren Wassermenge für seine geplanten Zwecke selbst überlassen wird und diese nicht in einfach erkennbarer Weise ablesbar ist. Im Sinne des wachsenden Energiesparbewußtseins wäre es aber von Vorteil, das Angebot an Warmwasser dem tatsächlichen Verbrauch möglichst genau anpassen zu können, sodaß der Energieeinsatz und der Wärmeverlust durch Auskühlung ohne Komforteinbuße minimiert werden können. Dies ist jedoch ohne bezug auf eine den Zwecken entsprechende Verbrauchsmenge nicht möglich.

Bei der Einrichtung zur Anzeige der Temperatur und des Wärmeinhaltes von Warmwasserbehältern gemäß der DE-OS 14 73 315 sind zwei Meßfühler vorgesehen, wobei die Maximaltemperatur sowie ein Temperaturmittelwert bestimmt wird. Der Benützer kann zwar auf einer Anzeige den Temperaturmaximalwert und den Mittelwert ablesen, die Anzeige von verfügbaren Wasser mit einer bestimmten Mindesttemperatur in vorbestimmten Mengeneinheiten ist jedoch nicht möglich, sodaß der Benützer immer wieder selbst die Uberlegung anstellen muß, wie oft beispielsweise noch baden oder Duschen möglich ist. Die genaue und energiesparende Anpassung an den tatsächlichen Verbrauch, gemessen in der Anzahl von Dusch- oder Wannenbädern ist in diesem Fall nicht möglich.

Jedoch ist bei Verwendung von mechanischen Zeigern als Anzeigeelemente bei der Einrichtung gemäß der DE-OS 14 73 315 möglich, das Anzeigesystem in die Heizungsregelung des Warmwasserbereiters einzubinden. Hiezu sind die Zeiger mit Kontakten versehen und es ist ein drittes gegenüber den Zeigern verdrehbares Element,ebenfalls mit Kontakten ausgerüstet,vorgesehen, das mit einem Drehknopf zur Einstellung der gewünschten Wassertemperatur verbudnen ist. Auch dieses Element kann die gewünschte Anpassung an den bedarf nicht in der einfachen und übersichtlichen Weise ermöglichen, wie dies bei Anzeige von Mengeneinheiten des wärmespeichernden Mediums möglich wäre, die den vom Benützer gewünschten Zwecken entsprechen. Schließlich sind auch bei der vorwiegend mechanischen bzw. elektromechanischen Einrichtung gemäß der DE-OS keine weiteren den Komfort erhöhenden betriebsweisen des Warmwasserbereiters möglich, die mit weiteren und komplexeren Eingriffen in die Heizungsregelung und allfälligen zeitlichen Unterbrechungen oder außergewöhnlichen Fahrweisen des Speichers verbunden sind, wie sie etwa die beispielsweise in der DE-OS 40 07 439 oder der AT-PS 394 182 beschriebenen periodischen Aufheizungen des Brauchwassers von Warmwasserbereitungsanlagen auf eine keimtötende Temperatur und das anschließende Zurückschalten auf die normale Betriebstemperatur darstellen.

Aufgabe der vorliegenden Erfindung war es daher, ein Meßwerterfassungssystem in Kombination mit einer Anzeige- und Reglerbaugruppe zu entwickeln, die den Benützer in einfacher und übersichtlicher Weise über den Wärmeinhalt des Gerätes in praxisbezogenen und einfach deutbaren Mengeneinheiten informiert, die Genauigkeit und den Komfort von bisherigen mechanischen Lösungen deutlich übertrifft und außerdem die Möglichkeit einer Energieeinsparung durch Anpassung der Heizungsregelung an die vom Benützer geplante Anforderung bietet. Außerdem sollten die wichtigen Kriterien der geringen Kosten, hohen Zuverlässigkeit, einfachen bedienbarkeit so wie eines geringen Stromverbrauchs erfüllt sein.

Zur Lösung dieser Aufgabe ist erfindungsgemäß vorgesehen, daß die mit einem vom Stromnetz aufladbaren Stromversorgungsteil zur Energieversorgung versehene elektronische Schaltung einen Mikroprozessor mit Analogeingängen, integriertem A/D-Wandler und einem Programmspeicher umfaßt, wobei die Meßfühler sowie eine Referenzspannungsquelle mit den Analogeingängen verbunden sind, der Mikroprozessor mit einer vorzugsweise binären Kodiereinrichtung zur Eingabe zumindest des Volumens oder der Masse des Mediums versehen und im Programmspeicher ein Programm abgelegt ist, das die Meßfühler einmal abfragt und daraus unter Berücksichtigung der Werte für das Volumen oder der Masse den Wärmeinhalt des Mediums und daraus unter weiterer Berücksichtigung eines eingegebenen Temperaturwertes die Menge des Mediums mit einer vorbestimmbaren Temperatur berechnet und ein entsprechendes digitales Signal an einen Datenausgang des Mikroprozessors legt, der mit einem Schaltkreis verbunden ist, der sowohl mit der Anzeige als auch mit dem Heizungsregelkreis und einem Resetkreis für den Mikroprozessor verbunden ist und ein Steuerprogramm enthält, das nach einer definierten Anzahl von Zählimpulsen ein Signal zum Zurücksetzen des Mikroprozessors und für einen neuerlichen Programmdurchlauf im Mikroprozessor erzeugt, der ein dem Wärmeinhalt proportionales Signal zur Ansteuerung des Heizungsregelkreises liefert.

Durch die Analogeingänge und den integrierten A/D-Wandler des Mikroprozessors können die analogen Signale den Sensoren direkt eingeleitet werden und ein zusätzlicher Wandler kann daher vermieden werden. Geringe Kosten ergeben sich auch dadurch, daß die Schaltung für unterschiedliche Volumina oder Massen des wärmespeichernden Mediums, d.h. für unterschiedliche Speichergößen gleich aufgebaut und auch mit dem gleichen Programm versehen werden kann, und vor dem Einbau in ein bestimmtes Gerät mit vorgegebener Größe über die Kodiereinrichtung der Schaltung das Volumen oder die Masse des Mediums mitgeteilt wird. Erst mit dieser Kodierung wird die Schaltung auf eine bestimmte Gerätegröße festgelegt. Vorteilhafterweise wird die Kodierung als Binärkodierung gewählt, wobei vorzugsweise 8 Schaltelemente od.dgl., 8 Bits repräsentierend, vorgesehen sind, die 256 verschiedene Möglichkeiten ergeben, welchen über das Steuerprogramm verschiedene Volumina zuordnet werden können. Beispielsweise kann die durch die Kodierung vorgegebene binäre Zahl durch das Programm mit einem gewissen Faktor multipliziert und ein gewisser konstanter Wert dazu addiert werden, um die Speichergröße zu repräsentieren. Vorteilhafterweise wird die konstante Größe mit dem geringsten möglichen Speichervolumen, d.h. der kleinsten Gerätedimension gleichgesetzt. Diese Einstellung würde konstante Schritte zwischen den Gerätegrößen ergeben. Es besteht aber auch die Möglichkeit, den 256 vorgegebenen Möglichkeiten verschiedene Volumina, beispielsweise über eine Kodiertabelle im Programm, frei und in beliebigen Schritten zuzuordnen.

Die Eingabe der Kodierung kann entweder irreversibel, d.h. beispielsweise durch Aufbohren von auf der Platine vorgesehenen Durchkontaktierungen, oder auch nachträglich veränderbar über Schalter oder ähnliche Einrichtungen erfolgen. Auch entfernbare oder wieder einsetzbare Lötbrücken zur Kodierung wären möglich. Aus diesem Grund eignet sich das erfindungsgemäße Meßwerterfassungssystem auch vorzüglich zum nachträglichen Einbau in bereits bestehende Geräte oder zur weiteren Verwedung in Geräten gleicher, aber auch allenfalls unterschiedlicher Größe.

Das Programm des Mikroprozessors fragt die Signale der Meßfühler ein Mal pro Durchlauf ab und berechnet aus dem Meßwert für die mittlere Temperatur und der fix vorgegebenen Kaltwassertemperatur unter Berücksichtigung der durch die Kodierung vorgegebenen Werte für das Volumen oder die Masse den Wärmeinhalt des Mediums. Überdies ist ein weiterer Temperaturwert eingegeben, der etwa der Differenz der gewünschten Abgabetemperatur und der Kaltwassertemperatur entspricht. Der Mikroprozessor berechnet nun den Wärmeinhalt des Medium in bezug auf diese Temperatur und legt ein entsprechendes Signal an einen Datenausgang. Die Berechnung liefert als Ausgangssignal die Menge von verfügbarem Medium mit der verlangten Mindestabgabetemperatur. Wenn beispielsweise bei Warmwasserspeichern die Mindestabgabetemperatur des Mediums für Dusch- oder Wannenbäder mit 45°C festgelegt ist, wird im Mikroporozessor nach der Formel $Q_{45} = V_{sp} \frac{(Tm - 10)}{(45 - 10)}$ die Menge 45°-igen Wassers $Q_{45}$ berechnet, welche aufgrund der gemessenen mittleren Temperatur Tm über die Speicherhöhe durch Mischen mit kaltem (10°C) zulaufenden Wasser erreicht werden kann. Sollte die vom zweiten Meßfühler gemessene Maximaltemperatur unter der Mindestabgabetemperatur von beispielsweise 45°C liegen, gibt das Programm das Signal, die Anzeige des Wärmeinhaltes auszublenden. So wird der Benützer darüber informiert, daß kein ausreichend warmes Brauchwasser vorhanden ist.

Der Gesamtverbrauch der Schaltung ist dadurch bedeutend vermindert, daß das Programm in einer vorgegebenen Zeiteinheit nur einmal durchlaufen wird und der Mikroprozessor nach dem Programmdurchlauf vom Steuerprogramm in einen sogenannten "sleep-mode" versetzt und desaktiviert wird. Um die Anzeige wieder zu aktualisieren, muß das Programm wieder vom Anfang an abgearbeitet werden. Dies wird dadurch erzielt, daß der mit der Anzeige verbundene Schaltkreis auch mit einem Resetkreis für den Mikroprozessor verbunden ist und ein Steuerprogramm enthält, das nach einer definierten Anzahl von Zählimpulsen ein Signal zum Zurücksetzen des Mikroprozessors und für einen neuerlichen Programmdurchlauf im Mikroprozessor erzeugt. Selbstverständlich besteht die Möglichkeit, die Anzahl der Zählimpulse softwaremäßig der Änderung des Wärmeinhaltes anzupassen. Während bei keiner oder nur geringer Änderung zwischen den beiden letzten gemessenen Werten des Wärmeinhaltes das Programm etwa alle 30 sec neu gestartet wird, kann diese Zeitspanne bei großen Änderungen des Wärmeinhaltes bis auf einige Sekunden verringert werden.

Vorteilhafterweise ist das erfindungsgemäße Meßwerterfassungssystem auch in die Heizungsregelung mit einbezogen, was durch die Verbindung des auch die Anzeige ansteuernden Schaltkreises mit dem Heizungsregelkreis erzielt ist und somit gleichzeitig neben der Anzeige der Wärmemenge und deren ermittelter Veränderung auch diesen Werten proportionale Steuersignale an die Heizung von der elektronischen Schaltung ableitbar sind.

Da aufgrund der höheren Wirtschaftlichkeit viele Wärmespeicher mit Nachtstrom betrieben werden, ist schließlich noch vorgesehen, daß die elektronische Schaltung mit einem vom Stromnetz aufladbaren Akkumulatorteil, verbunden mit einer Trafo-Schaltung und inklusive einer den Ladevorgang steuernden Schaltgruppe, zur Energieversorgung versehen ist. Dadurch kann die elektronische Schaltung auch ohne direkte Verbindung zum Netz die Messung und Anzeige des Wärmeinhaltes durchführen, da ja der Großteil der vom Benützer herrührenden und von ihm zu überwachendnen Änderungen des Wärmeinhalts untertags, d.h. während des Ruhens der Energieversorgung, stattfinden wird.

Gemäß einem weiteren Merkmal der Erfindung beinhaltet das Programm oder eine mit dem Mikroprozessor verbundene Speichereinrichtung Werte für charakteristische Abgabemengeneinheiten des Mediums und enthält der Mikroprozessor ein Programm, das ein der Menge des Mediums mit einer vorbestimmten Temperatur in einer charakteristischen Abgabemengeneinheit des Mediums proportionales Signal an den mit dem Schaltkreis verbundenen Datenausgang des Mikroprozessors legt.

Dadurch wird das dem Wärmeinhalt entsprechende Signal derart weiterverarbeitet, daß der Benutzer auf der Anzeige den für ihn nutzbaren Wärmeinhalt in einfach zu deutenden Mengeneinheiten bzw. einer bestimmten Anzahl dieser Mengeneinheiten ablesen kann. beispielsweise kann auf der Anzeige ausgegeben werden, wie viele Wannen- oder Duschbäder, deren Wasserbedarf jeweils einer charakteristischen Mengeneinheit entspricht, mit dem gemessenen Wärmeinhalt noch möglich sind.

Dabei sei auch angemerkt, daß die Mindestabgabetemperatur sowie die besagten Abgabemengeneinheiten allenfalls auch wie die Speichergröße über eine binäre Kodierung oder durch Verbindung eines Analogeinganges des Mikroprozessors mit einem analogen Eingabeinstrument, wie beispielsweise einem Regler mit Trimmpotentiometer, dem Verarbeitungsprogramm im Mikroprozessor der elektronischen Schaltung mitgeteilt werden könnte. Diese Varianten sind bei wechselnden Anforderungen oder bei Systemen zur Nachrüstung unterschiedlicher bestehender Speichertypen von Vorteil, wobei dieser Regler gleichzeitig für die Einstellung der Ladetemperatur genutzt werden könnte.

Da der Benützer beispielsweise bei Warmwasserspeichern genau sieht, wie viele Wannen- oder Duschbäder ihm zur Verfügung stehen, kann er bei bekanntem bedarf die Heizung vorteilhafterweise derart beeinflussen, daß das Angebot an Warmwasser seinem tatsächlichen Verbrauch genau entspricht. Dadurch wird eine optimale Energieeinsparung möglich.

Bei vielen wärmespeichernden Geräten, insbesondere Warmwasserbereitern, ist vorgesehen, sie auch in Wochenendhäusern oder Ferienwohnungen zu installieren, die nur saisonweise benutzt werden.

Da sich bei länger ausbleibender Stromversorgung der Akkumulatorteil entleeren würde, könnte dies zu einer Umpolung und einer Vernichtung der Elektronik führen. Um dem vorzubeugen, ist als zusätzliches Merkmal eine Sicherheitsschaltung vorgesehen, die erfindungsgemäß eine Schalteinrichtung enthält, vorzugsweise umfassend zumindest einen MOSFET oder Transistor, die zwischen Akkumulatorteil und elektronischer Schaltung vorgesehen ist, und welche vom Steuerprogramm des Mikroprozessors aktivierbar ist, wenn die Netzspannung länger als eine vorgegebene Zeitspanne ausfällt. Für diesen Zweck ist ein Analogeingang des Mikroprozessors mit der Trafoschaltung verbunden. Die Information über die Dauer des Ausbleibens der Spannungsversorgung wird durch einen softwaremäßig realisierten Zähler ermittelt.

Gemäß einem weiteren Merkmal der Erfindung ist vorgesehen, daß der Mikroprozessor mit einer Überwachungsschaltung und diese Schaltung, der Meßfühler zur Ermittlung der mittleren Temperatur und die Referenzspannungsquelle zusätzlich mit einer analogen Vergleichsschaltung verbunden sind, wobei die Überwachungsschaltung einen Eingang für ein Kontrollsignal von Mikroprozessor und ein Zeitglied beinhaltet, das nach Ablauf einer definierten Zeitspanne ohne Änderung des Kontrollsignals einen Schaltkreis ansteuert, der die analoge Vergleichsschaltung mit dem Heizungsregelkreis verbindet, wobei die Überwachungsschaltung vorzugsweise auch mit einem Schalter zwischen Anzeigertreiberkreis und Anzeigeeinrichtung verbunden ist und diesen derart ansteuert, daß sich das Anzeigemuster bei Aktivierung der Vergleichsschaltung charakteristisch ändert.

Um also bei Ausfall der Anzeige- und Steuerelektronik einen Notbetrieb, wenn auch ohne Anzeige, zu ermöglichen, und trotzdem Warmwasser bereitzustellen, ist die besagte analoge Vergleichsschaltung vorgesehen, die in Form einer herkömmlichen Meßbrücke unter Verwendung des Signals der Meßfühler ein Steuersignal für den Heizungsregelkreis liefert. Vom Programm des Mikroprozessors wird von Zeit zu Zeit ein Signal an die Überwachungsschaltung geschickt und bei einem längeren Ausbleiben dieses Signals liefert das Zeitglied ein Signal, welches den Schaltkreis zur Verbindung der Vergleichsschaltung mit dem Heizungsregelkreis ansteuert. Durch die in der analogen Schaltung verwendeten Bauteile ist die Verstärkung und damit die zu erzielende Temperatur bzw. auch der Wärmeinhalt fix vorgegeben. Durch das Ausbleiben der Anzeige wird der Benützer darauf aufmerksam gemacht, daß die Elektronik defekt ist. Bis zum Austausch oder zur Reparatur ist jedoch der Notbetrieb weiter möglich. Weiters kann durch die Blockierung der Heizung bei einer Überschreitung einer vorgegebenen Grenztemperatur und unabhängig von der elektronischen Regelung der Heizstab vor einer möglichen Überhitzung geschützt werden. Diese Überwachung der Temperatur ist softwaremäßig realisiert.

Erfindungsgemäß ist in der analogen Schaltung die Masse oder das Volumen sowie die Mindestabgabetemperatur des Mediums durch ein die Verstärkung des Signals des Meßfühlers bestimmendes Bauteil, beispielsweise einen einstellbaren Widerstand parallel zu einem Operationsverstärker der Vergleichsschaltung, repräsentiert, sodaß das Signal des Meßfühlers unter der Berücksichtigung der repräsentierten Werte in ein dem Wärmeinhalt des Mediums und der Menge des Mediums mit einer vorbestimmten Temperatur proportionales Signal umgewandelt wird.

Beim erfindungsgemäßen Meßwerterfassungssystem kann auch vorgesehen sein, daß der Mikroprozessor eine Speichereinrichtung umfaßt, in der zumindest die Werte für die Masse oder das Volumen des Mediums, allenfalls auch für die Ladetemperatur und die Mindestabgabetemperatur des Mediums abgelegt sind. Der Vorteil dieser Maßnahme liegt darin, daß die Schaltung durch einfaches Austauschen der Speichereinrichtung die Schaltung verschiedenen Gerätegrößen angepaßt werden kann.

Für die Ausgabe der vom Programm des Mikroprozessors ermittelten Werte ist erfindungsgemäße zumindest eine optische Anzeige, beispielsweise eine LC-Anzeige zur Darstellung von Zeichen, Piktogrammen und Zahlen, allenfalls eine akustische Einheit, beispielsweise unter Verwedung eines Sprachgenerators als Anzeigeeinrichtung vorgesehen. Damit ist eine einfache Information des Benützers durch leicht verständliche Symbole, vorzugsweise Wannen- und Duschsymbole in Verbindung mit Zählersymbolen, und Zahlenangaben, beispielsweise für die Maximaltemperatur, möglich.

Auch akustische Mitteilungen, sei es in Form von Warntönen bei Fehlfunktionen oder Übertemperatur, sowie Spezialausführungen unter Verwendung eines Sprachgenerators für sehbehinderte Benützer wären bei geeignetem Steuerprogramm möglich.

Durch die Vielzahl der programmgemäß berechenbaren Werte ist die Anzeige vorzugsweise auf die hauptsächlich notwendigen Werte beschränkt. Es ist aber vorgesehen, daß die Anzeigeeinrichtung mittels zumindest eines Bedienungselementes auf verschiedene Anzeigearten bzw. Modi, beispielsweise Anzeige der Menge des Mediums mit vorbestimmter Temperatur, der aktuellen Temperatur, der Ladetemperatur etc. umschaltbar ist. Als geeignetes Schaltelement sind beispielsweise Tasten, vorzugsweise eine wasserdichte Folientastatur, vorgesehen.

Aufgrund der Flexibilität des Programmes und im Sinne der Anpassung der Schaltung an verschiedene Speichergrößen- und Typen als auch an verschiedene Benutzeranforderungen, ist erfindungsgemäß vorteilhafterweise vorgesehen, daß der Mikroprozessor oder die Speichereinrichtung über zumindest ein Bedienungselement zur Veränderung zumindest eines der gespeicherten Werte ansteuerbar ist. Vorzugsweise wird diese Änderung im täglichen betrieb die Ladetemperatur betreffen, sodaß der zur Verfügung stehende Wärmeinhalt in einfacher Weise durch Veränderung der Ladetemperatur dem Bedarf angepaßt werden kann. Vorteilhafterweise erfolgt diese Ansteuerung ebenfalls über die zuvor angeführte Folientastatur.

Schließlich besteht durch die elektronische Regelung auch die Möglichkeit, daß der Mikroprozessor mit Bedienungselementen zur Eingabe einer Zeitspanne verbunden ist, innerhalb derer der Heizungsregelkreis das Medium auf einer Mindesttemperatur unterhalb der normalen Betriebstemperatur hält. Dies entspricht einer sogenannten Ferienschaltung, wobei über die Bedienungselemente, vorteilhafterweise wieder die besagte Folientastatur, die Anzahl der Ferientage eingestellt werden kann. Am letzten Tag wird der Heizungsregelkreis vom Überwachungsprogramm angesteuert, um das Medium wieder aufzuheizen und auf die vorab eingestellte Temperatur zu bringen. Insbesondere bei Warmwasserbereitern in Sanitärbereich kann dabei zusätzlich vorgesehen sein, daß der Mikroprozessor ein Programm enthält, das nach Ablauf der über die Bedienungselemente eingegebenen Zeitspanne ein Signal zur Ansteuerung des Heizungsregelkreises liefert, um das Medium unabhängig von der eingestellten Ladetemperatur einmal auf eine vorgegebene keimtötende Temperatur aufzuheizen und anschließend auf die eingestellte Ladetemperatur zurückzuschalten. Dieses einmalige Aufheizen am Ende der Ferientage auf eine keimtötende Temperatur, um die bakterielle Sicherheit zu gewährleisten, ist wesentlich energiesparender als fortgesetztes periodisches Aufheizen und Abkühlen.

In der nachfolgenden Beschreibung soll die Erfindung und deren Funktion anhand eines bevorzugten Ausführungsbeispieles unter Bezugnahme auf die beigefügten Zeichnungen näher beschrieben werden. Dabei zeigt

Fig. 1 eine schematische Darstellung des erfindungsgemäßen Meßwerterfassungssystems in der einfachsten Ausführung,

Fig. 2 eine erweiterte Ausführung, ebenfalls in schematischer Darstellung wobei die Spannungsversorgung durch strichlierte Linien, die Meßsignale durch strich-punktierte Linien und Steuer- sowie Datensignale durch ausgezogene Linien symbolisiert sind,

Fig. 3 einen Schaltplan des elektronischen Teiles der Schaltung und

Fig. 4 den Analogteil, d.h. die Peripherie der elektronischen Schaltung der Fig.3.

Die gesamte Baugruppe des Meßwerterfassungssystems mit Anzeige- und Reglerteil samt Akku- und Ladeschaltung wurde auf einer Leiterplatte unter Verwendung von SMT realisiert. Sie besteht im wesentlichen aus einem 8bit Mikroprozessor 1 mit integriertem ADU und 8kbyte Programmspeicher, einem Stromversorgungsteil 2 mit Akkuladung, einem Sensor 3 für die Ermittlung der mittleren Temperatur, einem Sensor 4 für die Maximaltemperatur, einem Heizungsregelkreis 5, vorzugsweise mit optischen Kopplern für die Leistungssteuerung, einem Schaltkreis 6 und der Anzeigeeinrichtung 7. Das Volumen wird über eine binäre Kodiereinrichtung 8 eingegeben und Werte im Programm bzw. im Speicher, wie etwa die Ladetemperatur,können über eine wasserdichte Folientastatur 9 eingegeben werden. Das periodische "wake-up" des Mikroprozessors 1 aus dem "sleepmode" nach dem jeweiligen Programmdurchlauf erfolgt durch den Schaltkreis 6, der zu diesem Zweck mit einem Resetkreis 10 verbunden ist. Der Schaltkreis 6 ist entsprechend seiner Aufgabe als Anzeigetreiberkreis ein speziell entwickelter ASIC auf Standardzellenbasis. Vom mit einer Trafoschaltung 17 verbundenen und eine die Aufladung des Akkus steuernde und vom Mikroprozessor 1 steuerbare Ladeschaltung enthaltenden Stromversorgungsteil 2 wird der Mikroprozessor 1 über eine Schaltung 11 auch mit der Referenzspannung und sowohl der Mikroprozessor 1 als auch der Schaltkreis 6 mit der Betriebsspannung sowie die Sensoren 3 und 4 mit der Meßspannung versorgt.

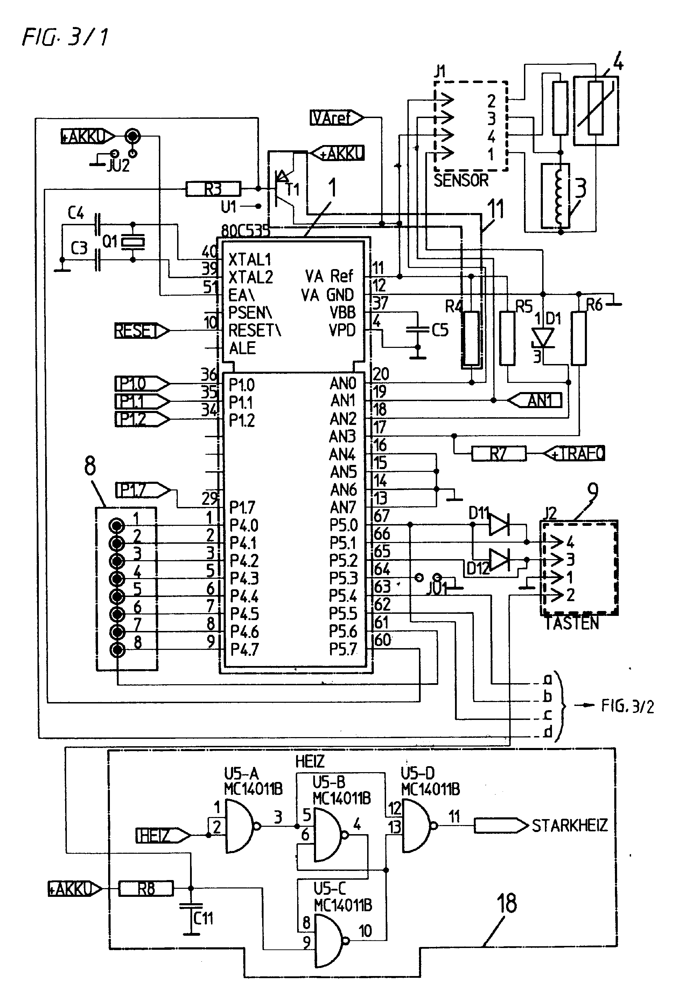

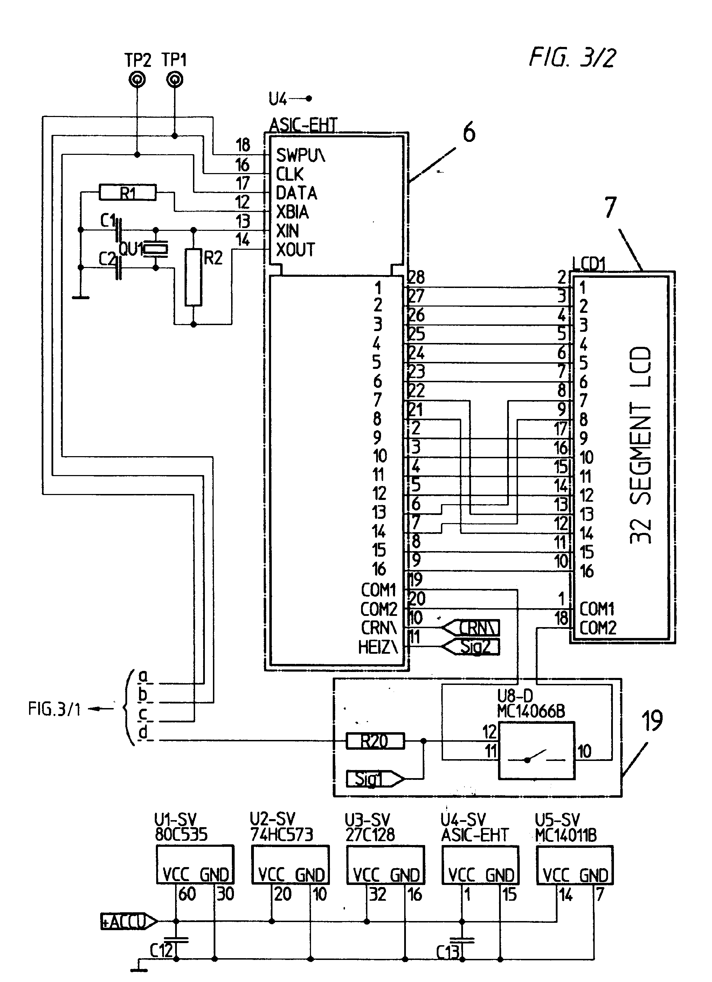

Über die Analogeingänge des Mikroprozessors 1 werden dem Programm folgende gemessene Größen mitgeteilt: die Spitzentemperatur vom Sensor 4, die mittlere Temperatur vom Sensor 3, die Akkuspannung, welche gleichzeitig über die Schaltung 11 die Referenzspannung liefert, sowie der Nachtstrom über die Trafoschaltung. Für die Messung der Maximaltemperatur wird ein kostengünstiger Silizium-Temperatursensor eingesetzt und mit einem möglichst genauen Vorwiderstand an die Versorgungsspannung gelegt. Für die Messung des Wärmeinhaltes wird ein über die gesamte Boilerhöhe aufgebrachter Widerstandsdraht als Sensor 3 eingesetzt, der einen Ast eines Spannungsteilers bildet. Ein Abgleich dieses Spannungsteilers erfolgt bei 20°C. Der Einfluß der Schichtung im Inneren des wärmespeichernden Gerätes wird, aus empirischen Daten ermittelt, softwaremäßig berücksichtigt. Die genaue Beschaltung der Analogeingänge, die Schaltung der Meßfühler 3, 4, den Aufbau der Schaltung 11 und die Verbindung des Mikroprozessors 1 mit der Tastatur 9 sowie weitere Details der elektronischen Schaltung, beispielsweise die Taktgeber für Mikroprozessor 1 und Schaltkreis 6, sind in Fig. 3 dargestellt. Sollte das Signal für die mittlere oder die maximale Temperatur außerhalb des softwaremäßig vorgegebenen zulässigen bereiches liegen, wird die Heizung vom Steuerprogramm des Mikroporozessors ausgeschaltet.

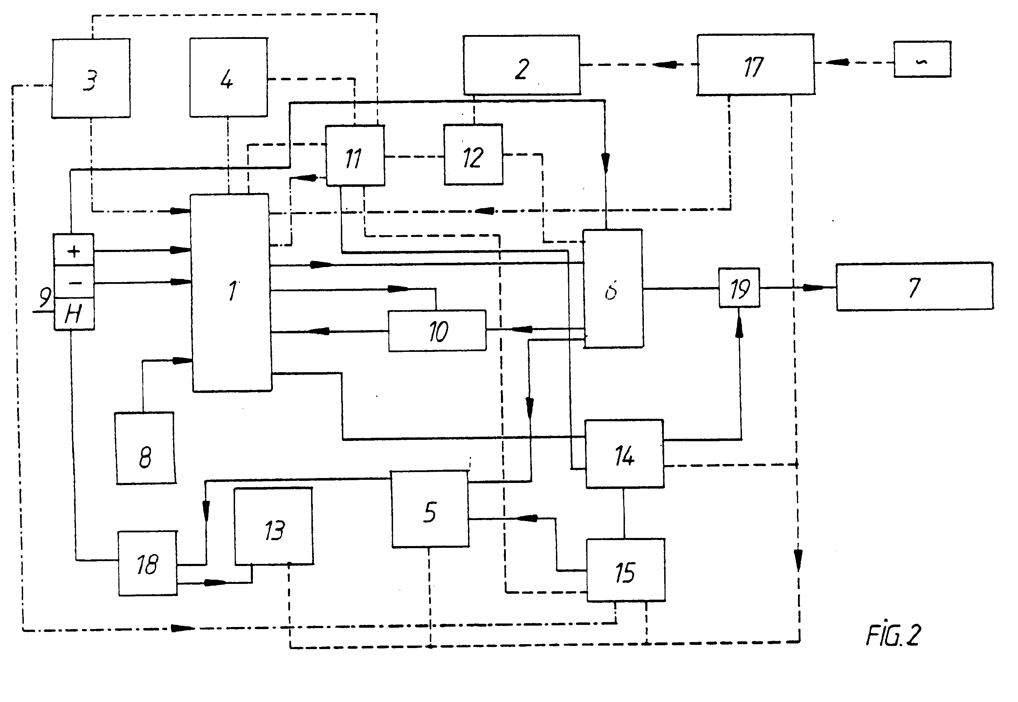

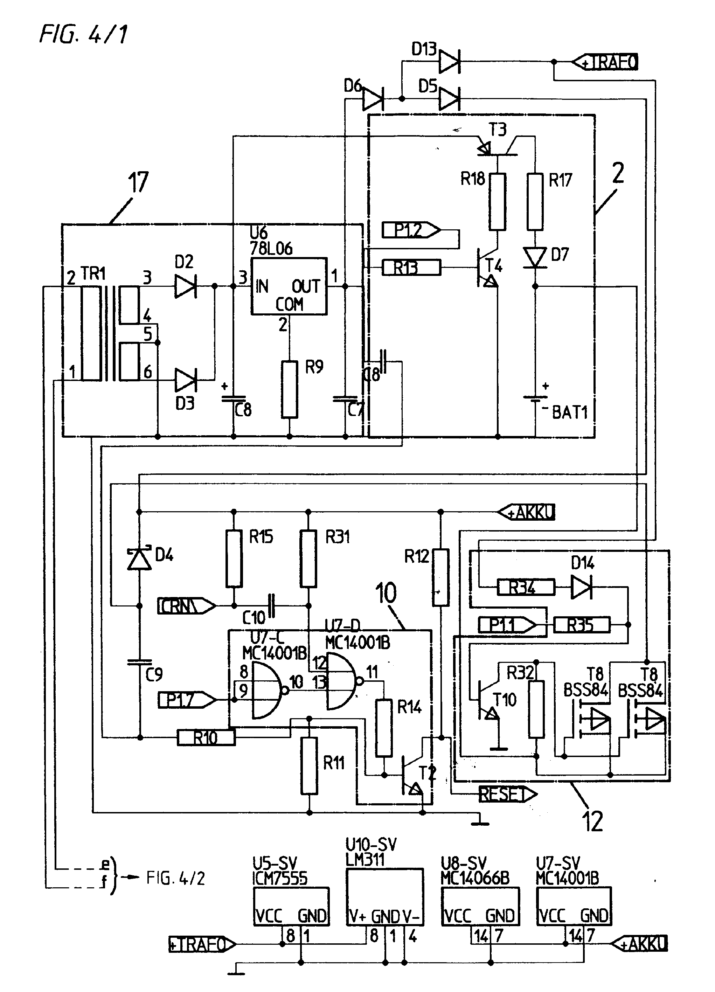

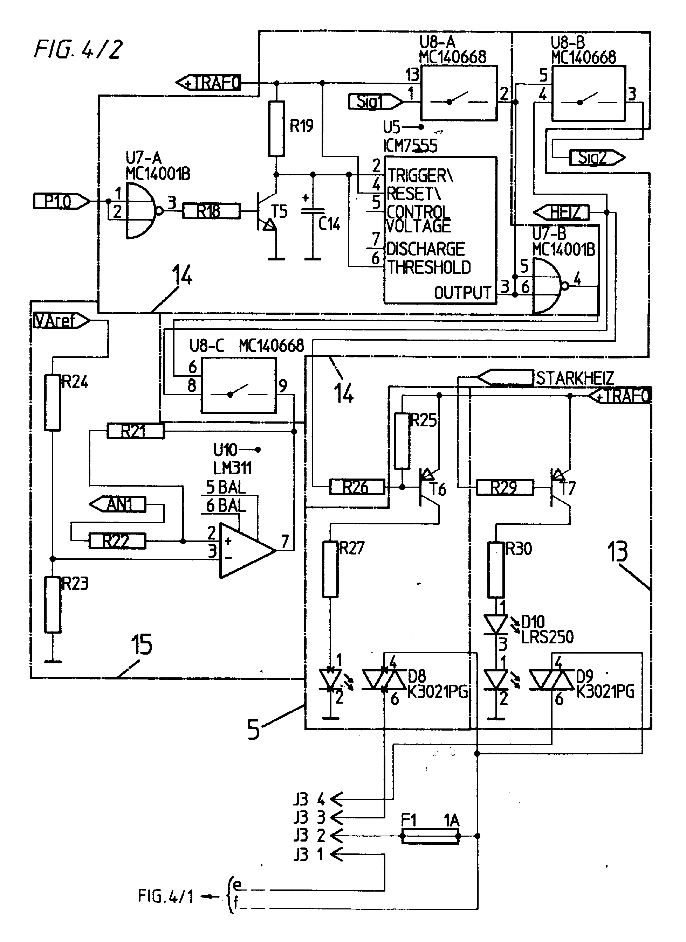

Betrieben wird die Baugruppe mit einem NiCd-Akku, der durch Nachtstrom über eine Transformatorschaltung 17 und eine in den Stromversorgungsteil 2 integrierte Ladeschaltung (siehe Fig. 4) mit rund 10mA dauergeladen wird. Bei Überschreitung der Ladespannung von 5,6V wird der Ladestrom abgeschaltet, während bei Unterschreitung der Nennspannung des Akkus, oder nach Ausbleiben der Spannungsversorgung, d.h. des Nachtstromes,für mehr als 48 Stunden, die gesamte Schaltung von der in Fig. 2 schematisch dargestellten Trennschaltung 12 vom Akku getrennt wird, um einen Defekt durch Tiefentladung zu verhindern. Die genaue Ausführung der Trennschaltung 12, im speziellen Fall unter Verwendung zweier paralleler MOSFETs, ist ebenfalls dem Schaltbild des Analogteiles (Fig. 4) zu entnehmen. Für diesen Zweck wird einer der Analogeingänge des Mikroprozessors 1 mit der Transformatorschaltung 17 verbunden. Nach Absinken der dabei gemessenen Spannung wird ein softwaremäßig realisierter Zähler in Gang gesetzt, der erst durch das neuerliche Ansteigen der gemessenen Spannung wieder zu rückgesetzt wird. bleibt dieser Anstieg für eine durch eine bestimmte Anzahl von Impulsen charakterisierte Zeitspanne aus, gibt der Mikroprozessor 1 ein Signal an die Schaltung 12, welche daraufhin alle mit dem Akkuteil 2 verbundenen Bauteile von diesem trennt.

Bei Geräten, die auch mit Tagstrom betrieben werden können, kann die Aufheizung durch das Drücken einer in die Folientastatur 9 integrierten Starkheiztaste 9′ beschleunigt werden. Dadurch wird ein zweiter Starkheizkreis 13 (s.Fig. 2 und 4) aktiviert, der gemeinsam mit der Grundheizung 5 geregelt wird. Durch Drücken der Starkheiztaste 9′ wird in einem Schaltkreis 18, welcher vorzugsweise aus NOR-Gattern realisiert ist (s.Fig. 3), dieses Signal so lange vorgemerkt, bis ein zweites Signal vom Heizungsregelkreis 5, das dessen Aktivierung durch das vom Schaltkreis 6 gelieferte Signal anzeigt, die Schaltung 18 erreicht, worauf diese ein den Starkheizkreis 13 aktivierendes Signal abgibt. Die Starkheizung 13 kann somit nur aktiviert werden, wenn die Heizung 5 eingeschaltet ist (die Starkheizung zeigt kein Speicherverhalten).

Bei der schematischen Darstellung der Fig. 2 ist weiters die Überwachungsschaltung 14 dargestellt, die gegebenenfalls eine Analogregelung 15 aktiviert, die mit der Heizung 5 verbunden ist. Die Überwachungsschaltung 14 ist ihrerseits mit dem Mikroprozessor 1 sowie dem Anzeigetreiberkreis 6 verbunden. Ein eventueller Ausfall oder eine Störung des Mikroprozessors 1 wird durch eine Änderung des von diesem an die Überwachungsschaltung 14 übermittelten Signales charakterisiert. Die Überwachungsschaltung 14 stellt diese Signaländerung fest und aktiviert die Analogregelung 15. Dadurch kann der Benützer bis zur möglichen Reparatur der Regeleinheit mit Warmwasser weiter versorgt werden, und der Heizstab wird vor möglicher Überhitzung geschützt. Zu Notregelung ist die Analogregelung 15 mit der Referenzspannungsquelle 11 sowie dem Sensor 3 verbunden und liefert ein die Heizung 5 regelndes Signal. Bei Aktivierung der Analogregelung 15 durch die Überwachungsschaltung 14 gibt diese auch über eine Verbindungsleitung ein Dauersignal an die Schaltung 11 ab, sodaß diese ununterbrochen die Referenzspannung und die Meßspannung für den Sensor 3 zur Verfügung stellt. Schließlich wirkt die Überwachungsschaltung 14 auch noch auf einen zwischen dem Schaltkreis 6 und der Anzeigeeinrichtung 7 eingesetzten Schalter, vorzugsweise einen CMOS-Analogschalter, ein und unterbricht eine der Verbindungsleitungen zwischen dem auch als Anzeigetreiberkreis 6 wirksamen und Anzeigeeinrichtung 7, sodaß auf letzterer ein von den normalen Anzeigemustern abweichendes Muster erscheint und den Benützer dadurch auf die aufgetretene Störung aufmerksam macht.

Im Normalfall liefert der Schaltkreis 6 das dem Wärmeinhalt des Mediums proportionales Signal, welches den Heizungsregelkreis 5 ansteuert. Das genaue Schaltschema ist auch hierzu der Fig. 4 zu entnehmen. Gleiches gilt auch für die Auslegung der Überwachungsschaltung 14 und der Analogregelung 15.

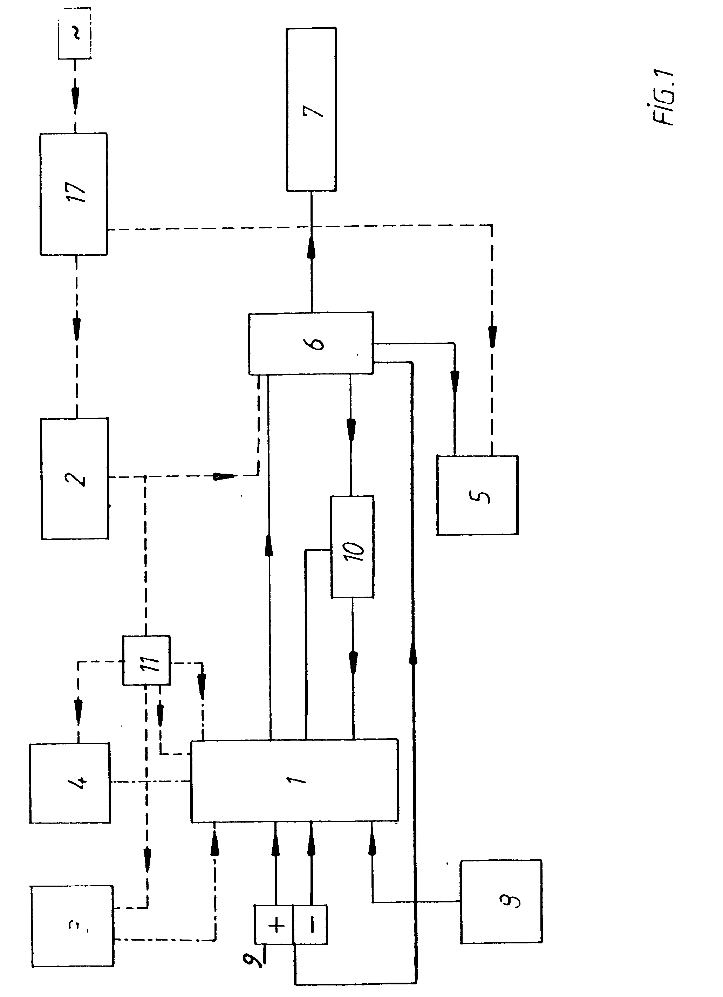

Wie sowohl in den Blockschaltbildern der Fig. 1 und 2, als auch im genauen Schaltbild der Fig. 3 dargestellt, ist die Folientastatur 9 mit dem Mikroprozessor 1 und auch mit dem Steuerteil des Schaltkreises 6 verbunden. Durch Drücken einer Taste der Folientastatur 9 wird über die Verbindungsleitung zum Schaltkreis 6 die Anzeigeeinrichtung 7 auf eine andere Anzeigeart bzw. einen anderen Modus umgestellt. Statt beispielsweise die verfügbare Menge an Medium mit einer vorbestimmten Temperatur und/oder die Maximaltemperatur anzuzeigen, kann durch den Tastendruck auf die eingestellte Ladetemperatur umgeschaltet werden. Dies ist insbesondere dann von Vorteil, wenn durch die Tastatur 9 auch die Ladetemperatur veränderbar ist. Über zumindest ein Schaltelement, d. h. eine Taste 9 od. dgl. kann der Mikroprozessor 1 derart angesteuert werden, daß einer der gespeicherten Werte, hier derjenige der Ladetempertur, verändert werden kann. Nach Verstreichen einer vorbestimmten Zeitspanne ohne weitere Betätigung des Schaltelementes 9 übernimmt der Mikroprozessor den eingegebenen und auch in der Anzeige dargestellten Wert in das Programm und ab dem nächsten Programmdurchlauf wird der geänderte Wert für die Ermittlung des Wärmeinhaltes und die Heizungsregelung zugrunde gelegt.

Der Mikroprozessor kann aber auch erkennen, daß beispielsweise zwei Tasten gleichzeitig gedrückt werden und für diesen Fall einen weiteren Eingabe- und Anzeigemodus vorsehen. In diesem Modus kann etwa ein weiteres Drücken eines der Bedienungselemente 9 z. B. den Wert einer Zeitspanne verändern, innerhalb der der Heizungsregelkreis das Medium allenfalls auf einer Mindesttemperatur unterhalb der normalen Betriebstemperatur hält. In diesem Anzeige- und Eingabemodus kann in einem Programm des Mikroprozessors 1 derjenige Wert verändert werden, der angibt, wieviele Zählerimpulse eines softwaremäßig realisierten Zählers nach dessen manuellem Start bis zur erneuten Aufnahme des normalen Betriebes nötig sind. Natürlich wird der jeweils eingestellte Wert in vorbestimmten Einheiten, vorzugsweise in Tagen, auf der Anzeige 7 angegeben.

Durch das Abschalten der Heizung des Speichers wird der Energieverbrauch dahingehend minimiert, daß nur noch für die Kontroll- und Steuerschaltung ein geringer Stromverbrauch gegeben ist. Für Anwendungszwecke, bei welchen durch sehr niedrige Umgebungstemperaturen die Gefahr besteht, daß das Wasser bei Abschalten der Heizung gefrieren könnte, ist vorteilhafterweise vorgesehen, daß der Speicher auf eine unterhalb der normalen Betriebstemperatur liegende Mindesttemperatur eingestellt wird. Diese kann fix vorgegeben sein oder auch vom Benützer durch Bedienungselemente 9 dem Mikroprozessor 1 mitgeteilt und damti den auftretenden Umgebungstemperaturen angepaßt werden. Diese Anpassung der Frostschutztemperatur hat den Vorteil, daß der Energieverbrauch während der Abwesenheit des Benutzers noch besser optimiert werden kann als bei fix vorgegebener Temperatur. Nach Ablauf der vom Benutzer einstellbaren Zeitspanne der Außerbetriebnahme des Brauchwassers wird durch ein Programm im Mikroprozessor 1 ein Signal an den Heizungsregelkreis 5 geliefert und das Medium auf eine vorgegebene keimtötende Temperatur, zumindest 60 - 65°C, aufgeheizt. Anschließend wird auf den normalen betrieb mit der eingestellten Ladetemperatur programmgesteuert zu rückgeschaltet. Vorzugsweise wird durch die Speicherwirkung und Isolierung der Geräte diese Temperatur so lange eingehalten, daß mit Sicherheit der überwiegende Anteil, vorzugsweise die Gesamtheit der Baktieren, abgetötet sind.

Beim nachfolgenden normalen täglichen betrieb wird wieder das gesamte Speichervolumen innerhalb von ein oder zwei Tagen ausgewechselt, da der Speicher in diesem Zeitraum in hohem Maß entleert wird und damit die Baktieren ausgeschwemmt werden und sich nicht eine derart große Menge an Baktieren ansammeln kann, die zu einer Infektionsgefahr führen würde. Daher ist im allgemeinen eine weitere periodisch erfolgende Aufheizung auf die keimtötende Temperatur nicht notwendig.

**Patentansprüche**

1. Meßwerterfassungssystem für wärmespeichernde Geräte mit einem Heizungsregelkreis, beispielsweise Warmwasserbereiter, Nacht- oder Pufferspeicher, mit einem Meßfühler zur Ermittlung der mittleren Temperatur des Mediums und einem weiteren Meßfühler zur Ermittlung der Maximaltemperatur des Mediums, sowie einer mit den Meßfühlern verbundenen elektronischen Schaltung und einer Anzeigeeinrichtung, dadurch gekennzeichnet, daß die mit einem vom Stromnetz aufladbaren Stromversorgungsteil (2) zur Energieversorgung vorgesehene elektronische Schaltung einen Mikroprozessor (1) mit Analogeingängen, integriertem A/D-Wandler und einem Programmspeicher umfaßt, wobei die Meßfühler (3,4) sowie eine Referenzspannungsquelle (11) mit den Analogeingängen verbunden sind, der Mikroprozessor (1) mit einer vorzugsweise binären Kodiereinrichtung (8) zur Eingabe zumindest des Volumens oder der Masse des Mediums versehen und im Programmspeicher ein Programm abgelegt ist, das die Meßfühler (3,4) einmal abfragt und daraus unter Berücksichtigung der Werte für das Volumen oder die Masse den Wärmeinhalt des Mediums und daraus unter weiterer Berücksichtigung eines eingegebenen Temperaturwertes die Menge des Mediums mit einer vorbestimmbaren Temperatur berechnet und ein entsprechendes digitales Signal an einen Datenausgang des Mikroprozessors (1) legt, der mit einem Schaltkreis (6) verbunden ist, der sowohl mit der Anzeige (7) als auch mit dem Heizungsregelkreis (5) und einem Resetkreis (10) für den Mikroprozessor (1) verbunden ist und ein Steuerprogramm enthält, das nach einer definierten Anzahl von Zählimpulsen ein Signal zum Zurücksetzen des Mikroprozessors (1) und für einen neuerlichen Programmdurchlauf im Mikroprozessor (1) erzeugt, der ein dem Wärmeinhalt proportionales Signal zur Ansteuerung des Heizungsregelkreises (5) liefert.

2. Meßwerterfassungssystem nach Anspruch 1, dadurch gekennzeichnet, daß das Programm oder eine mit dem Mikroprozessor (1) verbundene Speichereinrichtung Weite für charakteristische Abgabemengeneinheiten des Mediums beinhaltet und der Mikroprozessor (1) ein Programm enthält, das ein der Menge des Mediums mit einer vorbestimmten Temperatur in einer charakteristischen Abgabemengeneinheit des Mediums proportionales Signal an den mit dem Schaltkreis (6) verbundenen Datenausgang des Mikroprozessors (1) legt.

3. Meßwerterfassungssystem nach Anspruch 1, dadurch gekennzeichnet, daß eine Schalteinrichtung (12), vorzugsweise umfassend zumindest einen MOSFET oder Transistor, zwischen Akkumulatorteil (2) und elektronischer Schaltung vorgesehen ist, welche vom Steuerprogramm des Mikroprozessors (1) aktivierbar ist, wenn die Netzspannung länger als eine definierte Zeitspanne ausfällt.

4. Meßwerterfassungssystem nach Anspruch 1, dadurch gekennzeichnet, daß der Mikroprozessor (1) mit einer Überwachungsschaltung (14) und diese Schaltung (14),der Meßfühler (3) zur Ermittlung der mittleren Temperatur und die Referenzspannungsquelle (11) zusätzlich mit einer analogen Vergleichsschaltung (15) verbunden sind, wobei die Überwachungsschaltung (14) einen Eingang für ein Kontrollsignal vom Mikroprozessor (1) und ein Zeitglied beinhaltet, das nach Ablauf einer definierten Zeitspanne ohne Änderung des Kontrollsignals die analoge Vergleichsschaltung (15) mit dem Heizungsregelkreis (5) verbindet, wobei die Überwachungsschaltung (14) vorzugsweise auch mit einem Schalter (19) zwischen Anzeigertreiberkreis (6) und Anzeigeeinrichtung (7) verbunden ist und diesen derart ansteuert, daß sich das Anzeigemuster bei Aktivierung der Vergleichsschaltung (15) charakteristisch ändert.

5. Meßwerterfassungssystem nach Anspruch 4, dadurch gekennzeichnet, daß in der analogen Vergleichsschaltung (15) die Masse oder das Volumen sowie die Mindestabgabetemperatur des Mediums durch ein die Verstärkung des Signals des Meßfühlers (3) bestimmendes Bauteil, beispielsweise einen einstellbaren Widerstand parallel zu einem Operationsverstärker der Vergleichsschaltung,repräsentiert sind, sodaß das Signal des Meßfühlers (3) unter Berücksichtigung der repräsentierten Werte in ein dem Wärmeinhalt des Mediums und der Menge des Mediums mit einer vorbestimmbaren Temperatur proportionales Signal umgewandelt wird.

6. Meßwerterfassungssystem nach Anspruch 1, dadurch gekennzeichnet, daß der Mikroprozessor (1) eine baulich getrennte Speichereinrichtung umfaßt, in der zumindest die Werte für die Masse oder das Volumen des Mediums, allenfalls auch für die Ladetemperatur des Mediums, abgelegt sind.

7. Meßwerterfassungssystem nach Anspruch 1, dadurch gekennzeichnet, daß die Anzeigeeinrichtung (7) zumindest eine optische Anzeige, beispielsweise eine LC-Anzeige, zur Darstellung von Zeichen und Piktogrammen, allenfalls eine akustische Einheit, beispielsweise unter Verwendung eines Sprachgenerators, umfaßt.

8. Meßwerterfassungssystem nach Anspruch 1, dadurch gekennzeichnet, daß die Anzeigeeinrichtung (7) mittels zumindest eines Bedienungselementes (9) auf verschiedene Anzeigearten bzw. Modi, beispielsweise Anzeige der Menge des Mediums mit vorbestimmten Temperatur des Wärmeinhaltes, der aktuellen Temperatur, der Ladetemperatur, etc. umschaltbar ist.

9. Meßwerterfassungssystem nach zumindest einem der vorangehenden Ansprüche, dadurch gekennzeichnet, daß der Mikroprozessor (1) oder die Speichereinrichtung über zumindest ein Bedienungselement (9) zur Veränderung zumindest eines der gespeicherten Werte, vorzugsweise der Ladetemperatur, an steuerbar ist.

10. Meßwerterfassungssystem nach Anspruch 1, dadurch gekennzeichnet, daß der Mikroprozessor (1) mit Bedienungselementen (9) zur Eingabe einer Zeitspanne verbunden ist, innerhalb derer der Heizungsregelkreis (5) das Medium allenfalls auf einer Mindesttemperatur unterhalb der normalen Betriebstemperatur hält.

11. Meßwerterfassungssystem nach Anspruch 10, dadurch gekennzeichnet, daß der Mikroprozessor (1) ein Programm enthält, das nach Ablauf der über die Bedienungselemente (9) eingegebenen Zeitspanne ein Signal zur Ansteuerung des Heizungsregelkreises (5) liefert, um das Medium unabhängig von der eingestellten Ladetemperatur einmal auf eine vorgegebene keimtötende Temperatur aufzuheizen und anschließend auf die eingestellte Ladetemperatur zurückzuschalten.

FIG.1

EP 0 536 109 A1

FIG.2

FIG. 3/1

→ FIG. 3/2

FIG. 3/2

FIG. 4/1

FIG. 4/2

**Europäisches Patentamt**

# EUROPÄISCHER RECHERCHENBERICHT

Nummer der Anmeldung

EP 92 89 0210

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| P,X | EP-A-0 453 435 (AUSTRIA EMAIL EHT AG) 23. Oktober 1991 * das ganze Dokument * --- | 1 | F24D19/10 G05D23/19 |
| X | EP-A-0 375 259 (MATSUSHITA ELECTRIC WORKS LTD.) 27. Juni 1990 * Spalte 9, Zeile 19 - Spalte 17, Zeile 41; Abbildungen 9,10 * --- | 1,2,6-9 | |
| X | WO-A-9 012 261 (VOLTAGE REGULATED SYSTEMS) 18. Oktober 1990 * Seite 9, Zeile 20 - Seite 14, Zeile 22 * --- | 1,2 | |
| X | US-A-4 620 667 (T.R. VANDERMEYDEN) 4. November 1986 * das ganze Dokument * --- | 1,2 | |
| X | GB-A-2 132 791 (COLIN BAKER) 11. Juli 1984 * das ganze Dokument * --- | 1,2,6-11 | |
| X | GB-A-2 203 861 (HORSTMANN GEAR GROUP LTD.) 26. Oktober 1988 * Seite 3, Zeile 1 - Seite 8, Zeile 8 * --- | 1,2,7-9 | RECHERCHIERTE SACHGEBIETE (Int. Cl.5) |
| A | US-A-4 362 949 (J.L. MCKENNEY) 7. Dezember 1982 * Spalte 8, Zeile 12 - Spalte 8, Zeile 40; Abbildungen * ----- | 3 | F24D G05D G01K |

Der vorliegende Recherchenbericht wurde für alle Patentansprüche erstellt

| Recherchenort | Abschlußdatum der Recherche | Prüfer |
|---|---|---|
| DEN HAAG | 07 JANUAR 1993 | RAMBOER P. |